(19) Europäisches Patentamt
European Patent Office
Office européen des brevets

(11) EP 1 706 441 B1

(12) **EUROPÄISCHE PATENTSCHRIFT**

(45) Veröffentlichungstag und Bekanntmachung des Hinweises auf die Patenterteilung:
**18.03.2009 Patentblatt 2009/12**

(21) Anmeldenummer: **04804415.0**

(22) Anmeldetag: **30.12.2004**

(51) Int Cl.:
***C08G 73/18*** *(2006.01)* ***B01D 67/00*** *(2006.01)*
***B01D 71/64*** *(2006.01)*

(86) Internationale Anmeldenummer:
**PCT/EP2004/014830**

(87) Internationale Veröffentlichungsnummer:
**WO 2005/063851 (14.07.2005 Gazette 2005/28)**

(54) **PROTONENLEITENDE MEMBRAN UND DEREN VERWENDUNG**

PROTON-CONDUCTING MEMBRANE AND USE THEREOF

MEMBRANE CONDUCTRICE DE PROTONS ET SON UTILISATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **30.12.2003 DE 10361832**

(43) Veröffentlichungstag der Anmeldung:
**04.10.2006 Patentblatt 2006/40**

(73) Patentinhaber: **BASF Fuel Cell GmbH**
**65926 Frankfurt am Main (DE)**

(72) Erfinder:
- **UENSAL, Oemer**
**55128 Mainz (DE)**
- **BREHL, Kilian**
**35789 Weilmünster (DE)**
- **THIEMER, Edmund**
**65558 Flacht (DE)**

(74) Vertreter: **Luderschmidt, Wolfgang**
**John-F.-Kennedy-Strasse 4**
**65189 Wiesbaden (DE)**

(56) Entgegenhaltungen:
**WO-A-03/092090** **WO-A-03/096464**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 706 441 B1

## Beschreibung

Die vorliegende Erfindung betrifft eine neuartige protonenleitende Polymermembran auf Basis von Polyazolen, die aufgrund ihrer hervorragenden chemischen und thermischen Eigenschaften vielfältig eingesetzt werden kann und sich insbesondere als Polymer-Elektrolyt-Membran (PEM) in sogenannten PEM-Brennstoffzellen eignet.

Polyazole wie beispielsweise Polybenzimidazole (®Celazole) sind seit langem bekannt. Die Herstellung derartiger Polybenzimidazole (PBI) erfolgt üblicherweise durch Umsetzung von 3,3',4,4'-Tetraaminobiphenyl mit Isophthalsäure bzw. deren Estern in der Schmelze. Das entstehende Präpolymer erstarrt im Reaktor und wird anschließend mechanisch zerkleinert. Anschließend wird das pulverförmige Präpolymer in einer Festphasen-Polymerisation bei Temperaturen von bis zu 400°C endpolymerisiert und das gewünschte Polybenzimidazole erhalten.

Zur Herstellung von Polymerfolien wird das PBI in einem weiteren Schritt in polaren, aprotischen Lösemitteln wie beispielsweise Dimethylacetamid (DMAc) gelöst und eine Folie mittels klassischer Verfahren erzeugt.

Protonenleitende, d.h. mit Säure dotierte Polyazol-Membranen für den Einsatz in PEM-Brennstoffzellen sind bereits bekannt. Die basischen Polyazol-Folien werden mit konzentrierter Phosphorsäure oder Schwefelsäure dotiert und wirken dann als Protonenleiter und Separatoren in sogenannten Polymerelektrolyt-Membran-Brennstoffzellen (PEM-Brennstoffzellen).

Bedingt durch die hervorragenden Eigenschaften des Polyazol-Polymeren können derartige Polymerelektrolytmembranen - zu Membran-Elektroden-Einheiten (MEE) verarbeitet - bei Dauerbetriebstemperaturen oberhalb 100°C insbesondere oberhalb 120°C in Brennstoffzellen eingesetzt werden. Diese hohe Dauerbetriebstemperatur erlaubt es die Aktivität der in der Membran-Elektroden-Einheit (MEE) enthaltenen Katalysatoren auf Edelmetallbasis zu erhöhen. Insbesondere bei der Verwendung von sogenannten Reformaten aus Kohlenwasserstoffen sind im Reformergas deutliche Mengen an Kohlenmonoxid enthalten, die überlicherweise durch eine aufwendige Gasaufbereitung bzw. Gasreinigung entfernt werden müssen. Durch die Möglichkeit die Betriebstemperatur zu erhöhen, können deutlich höhere Konzentrationen an CO-Verunreinigungen dauerhaft toleriert werden.

Durch Einsatz von Polymer-Elektrolyt-Membranen auf Basis von Polyazol-Polymeren kann zum einen auf die aufwendige Gasaufbereitung bzw. Gasreinigung teilweise verzichtet werden und andererseits die Katalysatorbeladung in der Membran-Elektroden-Einheit reduziert werden. Beides ist für einen Masseneinsatz von PEM-Brennstoffzellen unabdingbare Voraussetzung, da ansonsten die Kosten für ein PEM-Brennstoffzellen-System zu hoch sind.

Die bislang bekannten mit Säure dotierten Polymermembrane auf Basis von Polyazolen zeigen bereits ein günstiges Eigenschaftsprofil. Aufgrund der für PEM-Brennstoffzellen angestrebten Anwendungen, insbesondere im Automobilbereich- und der dezentralen Strom- und Wärmeerzeugung (Stationärbereich), sind diese insgesamt jedoch noch zu verbessern. Darüber hinaus haben die bislang bekannten Polymermembranen einen hohen Gehalt an Dimethylacetamid (DMAc), der mittels bekannter Trocknungsmethoden nicht vollständig entfernt werden kann. In der deutschen Patentanmeldung Nr. 10109829.4 wird eine Polymermembran auf Basis von Polyazolen beschrieben, bei der die DMAc-Kontamination beseitigt wurde.

Aus den deutschen Patentanmeldung Nr. 10117686.4, 10117687.2 und 10144815.5 sind Polymermembranen auf Basis von Polyazolen bekannt, die aus Polyphosphorsäuren hergestellt werden. Diese Membranen zeigen eine ausgezeichnete Leistung, insbesondere bei Betriebstemperaturen oberhalb von 100°C. Nachteilig an diesen Membranen ist jedoch, daß sie eine relative hohe Überspannung, insbesondere an der Kathode aufweisen.

Aufgabe der vorliegenden Erfindung ist es organische Säure enthaltende Polymermembranen auf Basis von Polyazolen bereitzustellen, die einerseits die anwendungstechnischen Vorteile der Polymermembran auf Basis von Polyazolen aufweisen und andererseits eine gesteigerte spezifische Leitfähigkeit, insbesondere bei Betriebstemperaturen oberhalb von 100°C, aufweisen und zusätzliche eine deutlich niedrigere Überspannung, insbesondere an der Kathode aufweisen.

Wir haben nun gefunden, daß eine protonenleitende Membran auf Basis von Polyazolen erhalten werden kann, wenn das kommerziell erhältliche Polyazol-Polymere in organischen Phosphonsäureanhydriden suspendiert bzw. gelöst zur Herstellung der Membran eingesetzt wird

Bei dieser neuen Membran kann auf die in der deutschen Patentanmeldung Nr. 10109829.4 beschriebe spezielle Nachbehandlung verzichtet werden.

Gegenstand der vorliegenden Erfindung ist eine protonenleitende Polymermembran auf Basis von Polyazolen erhältlich durch ein Verfahren umfassend die Schritte

A) Lösen des Polyazol-Polymeren in organischen Phosphonsäureanhydriden unter Ausbildung einer Lösung und/ oder Dispersion,

B) Erwärmen der Lösung erhältlich gemäß Schritt A) unter Inertgas auf Temperaturen von bis zu 400°C, vorzugsweise bis zu 350°C, insbesondere von bis zu 300°C,

C) Bilden einer Membran unter Verwendung der Lösung des Polyazol-Polymeren gemäß Schritt B) auf einem Träger und

D) Behandlung der in Schritt C) gebildeten Membran bis diese selbsttragend ist.

Die in Schritt A) eingesetzten Polymere auf Basis von Polyazol enthalten wiederkehrende Azoleinheiten der allgemeinen Formel (I) und/oder (II)

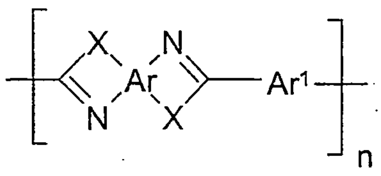

(I)

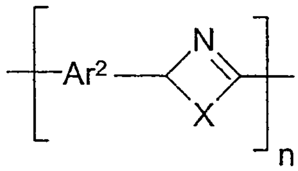

(II)

worin

- Ar gleich oder verschieden sind und für eine vierbindige aromatische oder heteroaromatische Gruppe, die ein- oder mehrkernig sein kann,
- $Ar^1$ gleich oder verschieden sind und für eine zweibindige aromatische oder heteroaromatische Gruppe, die ein- oder mehrkernig sein kann,
- $Ar^2$ gleich oder verschieden sind und für eine zwei oder dreibindige aromatische oder heteroaromatische Gruppe, die ein- oder mehrkernig sein kann,
- X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Anthracen und Phenanthren, die gegebenenfalls auch substituiert sein können, ab.

Dabei ist das Substitionsmuster von $Ar^1$ beliebig, im Falle vom Phenylen beispielsweise kann $Ar^1$ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

In einer weiteren Ausführungsform der vorliegenden Erfindung ist das Polymer enthaltend wiederkehrende Azoleinheiten ein Copolymer, das mindestens zwei Einheiten der Formel (I) und/oder (II) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend ein oder mehrere wiederkehrende Benzimidazoleinheiten werden durch die nachfolgende Formeln wiedergegeben:

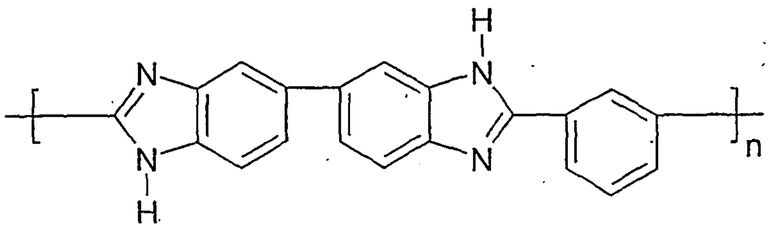

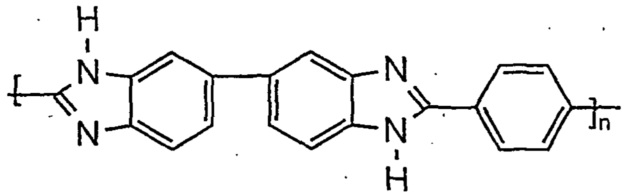

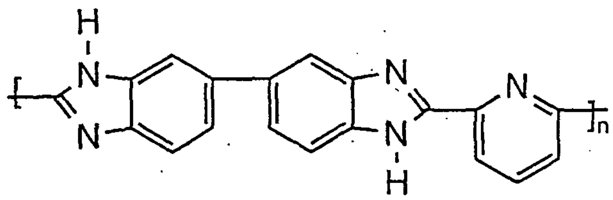

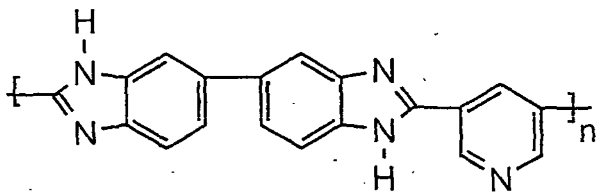

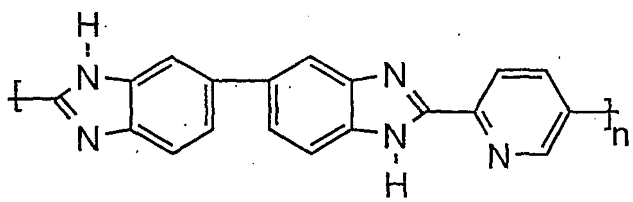

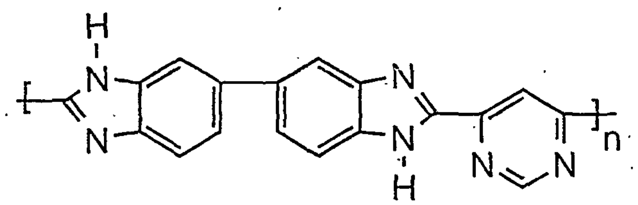

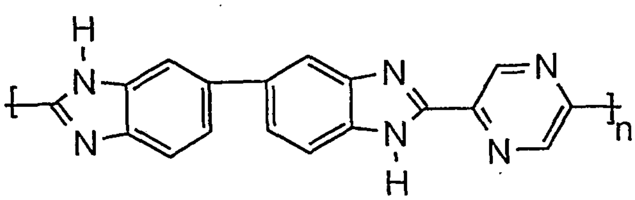

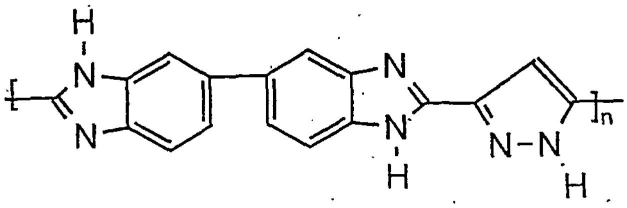

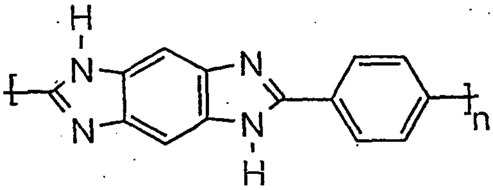

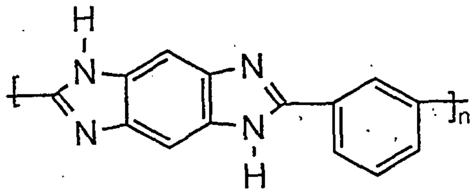

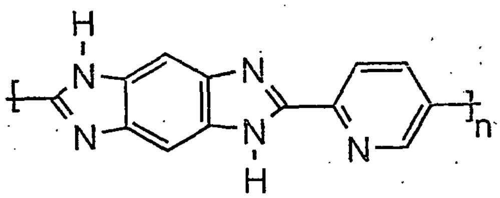

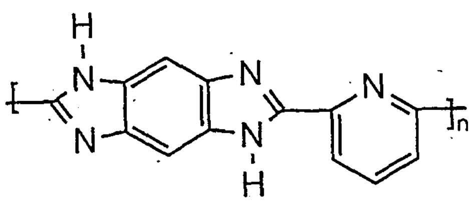

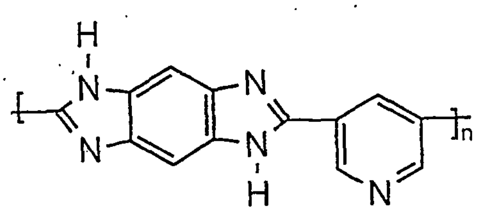

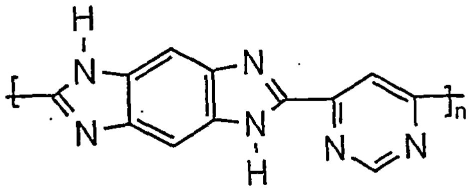

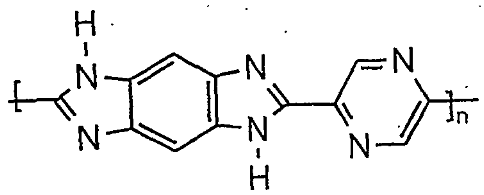

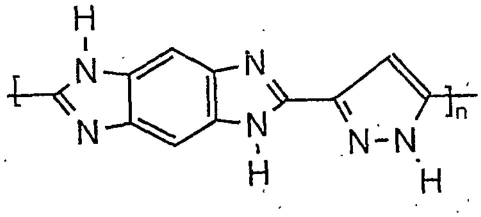

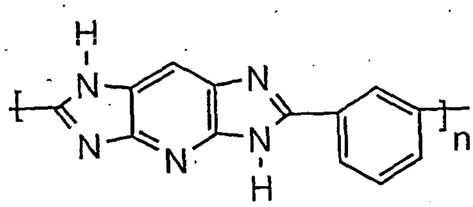

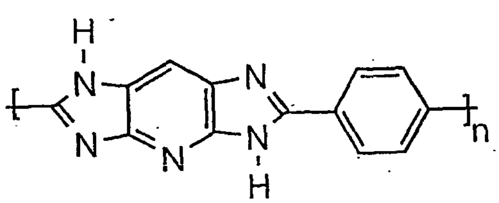

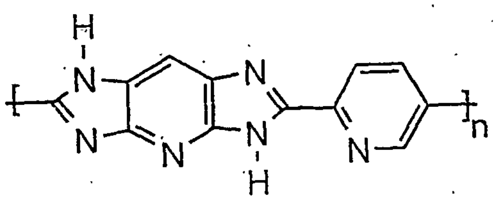

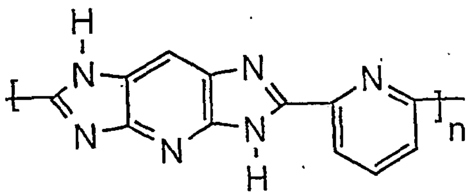

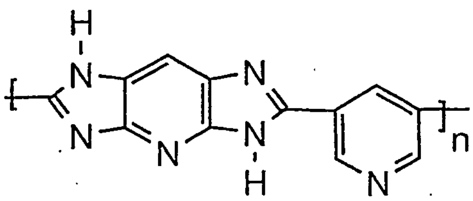

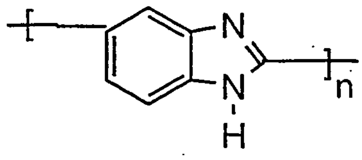

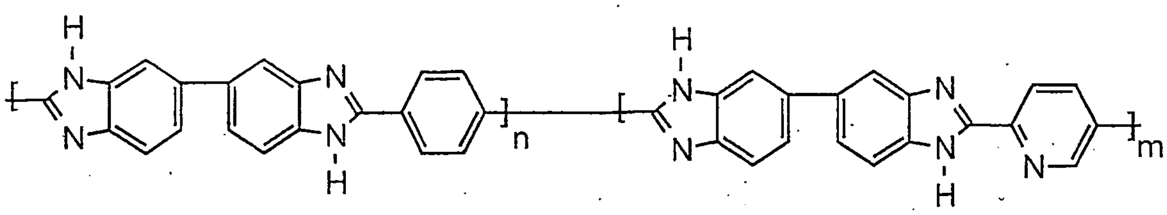

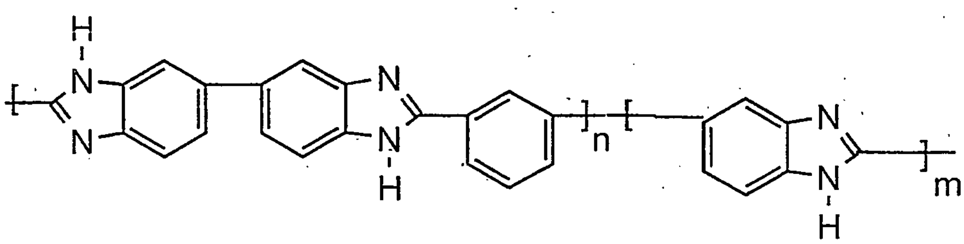

wobei n und m eine ganze Zahl größer gleich 10, vorzugsweise größer gleich 100 ist.

Die eingesetzten Polyazole, inbesondere jedoch die Polybenzimidazole zeichnen sich durch ein hohes Molekulargewicht aus. Gemessen als Intrinsische Viskosität beträgt diese mindestens 0,2 dl/g, vorzugsweise 0,2 bis 3 dl/g.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

Bei den in Schritt A) verwendeten organischen Phosphonsäureanhydriden handelt es sich um cyclischen Verbindungen der Formel

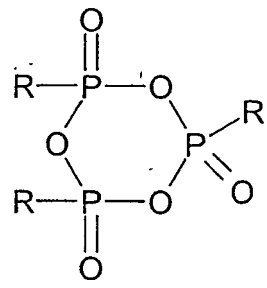

oder um linearen Verbindungen der Formel

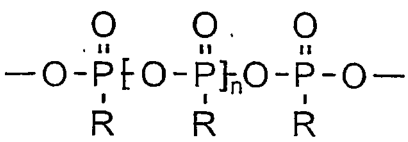

$n \geq 0$

oder um Anhydride der mehrfachen organsichen Phosphonsäuren wie z.B. der Formel von Anhydride der Diphosphonsäure

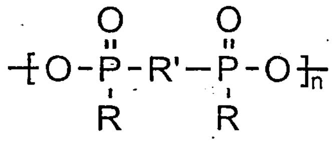

$n \geq 1$

worin der Rest R und R' gleich oder verschieden ist und für eine $C_1$ - $C_{20}$ -kohlenstoffhaltigen Gruppe steht.

Im Rahmen der vorliegenden Erfindung werden unter einer $C_1$ -$C_{20}$ -kohlenstoff-haltigen Gruppe bevorzugt die Reste $C_1$-$C_{20}$-Alkyl, besonders bevorzugt Methyl, Ethyl, n-Propyl, i-Propyl, n-Butyl, i-Butyl, s-Butyl, t-Butyl, n-Pentyl, s-Pentyl, Cyclopentyl, n-Hexyl, Cyclohexyl, n-Octyl oder Cyclooctyl, $C_1$ - $C_{20}$ - Alkenyl, besonders bevorzugt Ethenyl, Propenyl, Butenyl, Pentenyl, Cyclopentenyl, Hexenyl, Cyclohexenyl, Octenyl oder Cyclooctenyl, $C_1$ - $C_{20}$ - Alkinyl, besonders bevorzugt Ethinyl, Propinyl, Butinyl, Pentinyl, Hexinyl oder Octinyl, $C_6$-$C_{20}$-Aryl, besonders bevorzugt Phenyl, Biphenyl, Naphthyl oder Anthracenyl, $C_1$ - $C_{20}$ - Fluoralkyl, besonders bevorzugt Trifluormethyl, Pentafluorethyl oder 2,2,2-Trifluorethyl, $C_6$-$C_{20}$-Aryl, besonders bevorzugt Phenyl, Biphenyl, Naphthyl, Anthracenyl, Triphenylenyl, [1,1';3', 1"]Terphenyl-2'-yl, Binaphthyl oder Phenanthrenyl, $C_6$-$C_{20}$-Fluoraryl, besonders bevorzugt Tetrafluorophenyl oder Heptafluoronaphthyl, $C_1$-$C_{20}$-Alkoxy, besonders bevorzugt Methoxy, Ethoxy, n-Propoxy, i-Propoxy, n-Butoxy, i-Butoxy, s-Butoxy oder t-Butoxy, $C_6$-$C_{20}$-Aryloxy, besonders bevorzugt Phenoxy, Naphthoxy, Biphenyloxy, Anthracenyloxy, Phenanthrenyloxy, $C_7$-$C_{20}$-Arylalkyl, besonders bevorzugt o-Tolyl, m-Tolyl, p-Tolyl, 2,6-Dimethylphenyl, 2,6-Diethylphenyl, 2,6-Di-i-propylphenyl, 2,6-Di-t-butylphenyl, o-t-Butylphenyl, m-t-Butylphenyl, p-t-Butylphenyl, $C_7$-$C_{20}$-Alkylaryl, besonders bevorzugt Benzyl, Ethylphenyl, Propylphenyl, Diphenylmethyl, Triphenylmethyl oder Naphthalinylmethyl, $C_7$-$C_{20}$-Aryloxyalkyl, besonders bevorzugt o-Methoxyphenyl, m-Phenoxymethyl, p-Phenoxymethyl, $C_{12}$-$C_{20}$-Aryloxyaryl, besonders bevorzugt p-Phenoxyphenyl, $C_5$-$C_{20}$-Heteroaryl, besonders bevorzugt 2-Pyridyl, 3-Pyridyl, 4-Pyridyl, Chinolinyl, Isochinolinyl, Acridinyl, Benzochinolinyl oder Benzoisochinolinyl, $C_4$-$C_{20}$-Heterocycloalkyl, besonders bevorzugt Furyl, Benzofuryl, 2-Pyrolidinyl, 2-Indolyl, 3-Indolyl, 2,3-Dihydroindolyl, $C_8$-$C_{20}$-Arylalkenyl, besonders bevorzugt o-Vinylphenyl, m-Vinylphenyl, p-Vinylphenyl, $C_8$-$C_{20}$-Arylalkinyl, besonders bevorzugt o-Ethinylphenyl, m-Ethinylphenyl oder p-Ethinylphenyl, $C_2$ - $C_{20}$ - heteroatomhaltige Gruppe, besonders bevorzugt Carbonyl, Benzoyl, Oxybenzoyl, Benzoyloxy, Acetyl, Acetoxy oder Nitril verstanden, wobei eine oder mehrere $C_1$-$C_{20}$-kohlenstoffhaltige Gruppen ein cyclisches System bilden können.

Bei den vorstehend genannten $C_1$ - $C_{20}$ -kohlenstoff-haltigen Gruppen können ein oder mehrere nicht benachbarte $CH_2$- Gruppen durch -O-, -S-, $-NR^1$- oder $-CONR^2$- ersetzt sein und ein oder mehrere H-Atome können durch F ersetzt sein.

Bei den vorstehend genannten $C_1$ - $C_{20}$ -kohlenstoff-haltigen Gruppen die aromatische Systeme aufweisen können ein oder mehrere nicht benachbarte CH-Gruppen durch -O-, -S-, $-NR^1$- oder $-CONR^2$ ersetzt sein und ein oder mehrere H-Atome können durch F ersetzt sein.

Die Reste $R^1$ und $R^2$ sind gleich oder verschieden bei jedem Auftreten H oder ein aliphatischer oder aromatischer Kohlenwasserstoffrest mit 1 bis 20 C-Atomen.

Besonders bevorzugt sind organische Phosphonsäureanhydride die teil- oder perfluoriert sind.

Die in Schritt A) verwendeten organischen Phosphonsäureanhydride sind kommerziell erhältlich, beispielsweise das Produkt ®T3P (Propan-Phosphonsäureanhydrid) der Firma Clariant.

Die in Schritt A) verwendeten organischen Phosphonsäureanhydride können auch in Kombination mit Polyphosphorsäure und/oder mit $P_2O_5$ eingesetzt werden. Bei der Polyphosphorsäure handelt es sich um handelsübliche Polyphosphorsäuren wie diese beispielsweise von Riedel-de Haen erhältlich sind. Die Polyphosphorsäuren $H_{n+2}P_nO_{3n+1}$ (n>1) besitzen üblicherweise einen Gehalt berechnet als $P_2O_5$ (acidimetrisch) von mindestens 83%. Anstelle einer Lösung der Monomeren kann auch eine Dispersion/Suspension erzeugt werden.

Die in Schritt A) verwendeten organischen Phosphonsäureanhydride können auch in Kombination mit einfachen und oder mehrfachen organischen Phosphonsäuren eingesetzt werden.
Bei den einfachen und oder mehrfachen organischen Phosphonsäuren handelt es sich um Verbindungen der Formel

$$R\text{-}PO_3H_2$$

$$H_2O_3P\text{-}R\text{-}PO_3H_2$$

$$R[PO_3H_2]_n$$

$$n>2$$

worin der Rest R gleich oder verschieden ist und für eine $C_1$ - $C_{20}$-kohlenstoffhaltigen Gruppe steht.

Im Rahmen der vorliegenden Erfindung werden unter einer $C_1$ - $C_{20}$ -kohlenstoff-haltigen Gruppe bevorzugt die Reste $C_1$-$C_{20}$-Alkyl, besonders bevorzugt Methyl, Ethyl, n-Propyl, i-Propyl, n-Butyl, i-Butyl, s-Butyl, t-Butyl, n-Pentyl, s-Pentyl, Cyclopentyl, n-Hexyl, Cyclohexyl, n-Octyl oder Cyclooctyl, $C_6$-$C_{20}$-Aryl, besonders bevorzugt Phenyl, Biphenyl, Naphthyl oder Anthracenyl, $C_1$ - $C_{20}$ - Fluoralkyl, besonders bevorzugt Trifluormethyl, Pentafluorethyl oder 2,2,2-Trifluorethyl, $C_6$-$C_{20}$-Aryl, besonders bevorzugt Phenyl, Biphenyl, Naphthyl, Anthracenyl, Triphenylenyl, [1, 1';3',1"]Terphenyl-2'-yl, Binaphthyl oder Phenanthrenyl, $C_6$-$C_{20}$-Fluoraryl, besonders bevorzugt Tetrafluorophenyl oder Heptafluoronaphthyl, $C_1$-$C_{20}$-Alkoxy, besonders bevorzugt Methoxy, Ethoxy, n-Propoxy, i-Propoxy, n-Butoxy, i-Butoxy, s-Butoxy oder t-Butoxy, $C_6$-$C_{20}$-Aryloxy, besonders bevorzugt Phenoxy, Naphthoxy, Biphenyloxy, Anthracenyloxy, Phenanthrenyloxy, $C_7$-$C_{20}$-Arylalkyl, besonders bevorzugt o-Tolyl, m-Tolyl, p-Tolyl, 2,6-Dimethylphenyl, 2,6-Diethylphenyl, 2,6-Di-i-propylphenyl, 2,6-Di-t-butylphenyl, o-t-Butylphenyl, m-t-Butylphenyl, p-t-Butylphenyl, $C_7$-$C_{20}$-Alkylaryl, besonders bevorzugt Benzyl, Ethylphenyl, Propylphenyl, Diphenylmethyl, Triphenylmethyl oder Naphthalinylmethyl, $C_7$-$C_{20}$-Aryloxyalkyl, besonders bevorzugt o-Methoxyphenyl, m-Phenoxymethyl, p-Phenoxymethyl, $C_{12}$-$C_{20}$-Aryloxyaryl, besonders bevorzugt p-Phenoxyphenyl, $C_5$-$C_{20}$-Heteroaryl, besonders bevorzugt 2-Pyridyl, 3-Pyridyl, 4-Pyridyl, Chinolinyl, Isochinolinyl, Acridinyl, Benzochinolinyl oder Benzoisochinolinyl, $C_4$-$C_{20}$-Heterocycloalkyl, besonders bevorzugt Furyl, Benzofuryl, 2-Pyrolidinyl, 2-Indolyl, 3-Indolyl, 2,3-Dihydroindolyl, $C_2$ - $C_{20}$ - heteroatomhaltige Gruppe, besonders bevorzugt Carbonyl, Benzoyl, Oxybenzoyl, Benzoyloxy, Acetyl, Acetoxy oder Nitril verstanden, wobei eine oder mehrere $C_1$-$C_{20}$-kohlenstoffhaltige Gruppen ein cyclisches System bilden können.

Bei den vorstehend genannten $C_1$ - $C_{20}$ -kohlenstoff-haltigen Gruppen können ein oder mehrere nicht benachbarte $CH_2$- Gruppen durch -O-, -S-, $-NR^1$- oder $-CONR^2$- ersetzt sein und ein oder mehrere H-Atome können durch F ersetzt sein.

Bei den vorstehend genannten $C_1$ - $C_{20}$-kohlenstoff-haltigen Gruppen die aromatische Systeme aufweisen können ein oder mehrere nicht benachbarte CH-Gruppen durch -O-, -S-, $-NR^1$- oder $-CONR^2$ ersetzt sein und ein oder mehrere H-Atome können durch F ersetzt sein.

Die Reste $R^1$ und $R^2$ sind gleich oder verschieden bei jedem Auftreten H oder ein aliphatischer oder aromatischer Kohlenwasserstoffrest mit 1 bis 20 C-Atomen.

Besonders bevorzugt sind organische Phosphonsäuren die teil- oder perfluoriert sind.

Die in Schritt A) verwendeten organischen Phosphonsäuren sind kommerziell erhältlich, beispielsweise die

Produkte der Firma Clariant oder Aldrich.

Die in Schritt A) verwendeten organischen Phosphonsäuren umfassen keine vinylhaltigen Phosphonsäuren wie diese in der deutschen Patentanmeldung Nr. 10213540.1 beschrieben werden.

Die in Schritt A) erzeugte Mischung weist ein Gewichtsverhältnis organische Phosphonsäureanhydride zu Summe aller Polymeren von 1:10000 bis 10000:1, vorzugsweise 1:1000 bis 1000:1, insbesondere 1:100 bis 100:1, auf. Insofern diese Phosphonsäureanhydride im Gemisch mit Polyphosphorsäure oder einfachen und oder mehrfachen organischen Phosphonsäuren eingesetzt werden sind diese bei den Phosphonsäureanhydriden zu berücksichtigen. Des weiteren können der in Schritt A) erzeugten Mischung weitere organo-Phosphonsäuren, vorzugsweise perfluorierte organische Phosphonsäuren zugesetzt werden. Diese Zugabe kann vor und/oder während Schritt B) bzw. vor Schritt C) erfolgen. Hierdurch kann die Viskosität gesteuert werden.

Die Schichtbildung gemäß Schritt C) erfolgt mittels an sich bekannter Maßnahmen (Gießen, Sprühen, Rakeln) die aus dem Stand der Technik zur Polymerfilm-Herstellung bekannt sind. Als Träger sind alle unter den Bedingungen als inert zu bezeichnenden Träger geeignet. Zur Einstellung der Viskosität kann die Lösung gegebenenfalls mit Phosphorsäure (konz. Phosphorsäure, 85%) versetzt werden. Hierdurch kann die Viskosität auf den gewünschten Wert eingestellt und die Bildung der Membran erleichtert werden. Die Temperatur der erwärmten Lösung beträgt bis zu 400°C, Vorzugsweise zwischen 150 und 350°C, insbesondere zwischen 190 und 300°C.

Die gemäß Schritt C) erzeugte Schicht hat eine Dicke zwischen 20 und 4000 $\mu$m, vorzugsweise zwischen 30 und 3500 $\mu$m, insbesondere zwischen 50 und 3000 $\mu$m.

Die Behandlung der gemäß Schritt C) erzeugten Membran in Gegenwart von Feuchtigkeit bei Temperaturen und für eine Dauer bis die Schicht eine ausreichende Festigkeit für den Einsatz in Brennstoffzellen besitzt (Schritt D). Die Behandlung kann soweit erfolgen, daß die Membran selbsttragend ist, so daß sie ohne Beschädigung vom Träger abgelöst werden kann.

Die Behandlung der Membran in Schritt D) erfolgt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf bzw. und/oder wasserenthaltende Phosphorsäure von bis zu 85% bzw. und/oder in einer Mischung aus organischen Phosphonsäuren und/oder Sulfonsäuren enthaltenden Mischung in Wasser oder Phosphorsäure. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende organischen Phosphonsäureanhydriden durch partielle Hydrolyse unter Ausbildung von organo-Phosphonsäuren und/oder Phosphorsäure (insofern Polyphosphorsäure mit verwendet wurde) zur Verfestigung der Membran beiträgt.

Bei der Hydrolyse der organischen Phosphonsäureanhydriden gebildeten organo-Phosphonsäuren

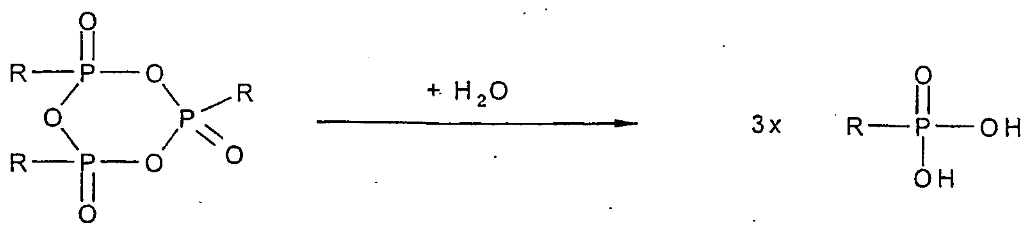


führen zu einer unerwarteten Reduzierung der Überspannung, insbesondere an der Kathode in einer Membran-Elektroden-Einheit die aus der erfindungsgemäßen Membran hergestellt wird.

Die partielle Hydrolyse der organischen Phosphonsäureanhydride in Schritt D) führt zu einer Verfestigung der Membran und zu einer Abnahme der Schichtdicke und Ausbildung einer Membran mit einer Dicke zwischen 15 und 3000 $\mu$m, vorzugsweise zwischen 20 und 2000 $\mu$m, insbesondere zwischen 20 und 1500 $\mu$m, die selbsttragend ist.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt D) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter

Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt D) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphonsäure und damit die Leitfähigkeit der erfindungsgemäßen Polymermembran einstellbar. Erfindungsgemäß wird die Konzentration der Protonen als Ionenaustauschkapazität angegeben (IEC-Ion exchange capacity). Im Rahmen der vorliegenden Erfindung ist eine IEC von mindestens 2 eq/g, bevorzugt 5 eq/g, besonders bevorzugt 10 eq/g.

Im Anschluß an die Behandlung gemäß Schritt D) kann die Membran durch Einwirken von Hitze in Gegenwart von Luftsauerstoff an der Oberfläche noch vernetzt werden. Diese Härtung der Membranoberfläche verbessert die Eigenschaften der Membran zusätzlich.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

Die erfindungsgemäße Polymermembran weist verbesserte Materialeigenschaften gegenüber den bisher bekannten dotierten Polymermembranen auf. Insbesondere zeigen sie im Vergleich mit bekannten dotierten Polymermembranen bessere Leistungen. Diese begründet sich insbesondere durch eine verbesserte Protonenleitfähigkeit. Diese beträgt bei Temperaturen von 120°C mindestens 0,1 S/cm, vorzugsweise mindestens 0,11 S/cm, insbesondere mindestens 0,12 S/cm.

Die erfindungsgemäßen Membranen können neben den Polymeren auf Basis von Polyazolen auch weitere Polymere als Blendmaterial beinhalten. Die Blendkomponente hat dabei im Wesentlichen die Aufgabe die mechanischen Eigenschaften zu verbessern und die Materialkosten zu verringern.

Hierzu kann das zusätzliche Blendmaterial vor, während oder nach Schritt A) und/oder B) oder vor Schritt C) zugegeben werden. Als Blendmaterial kommen Polyethersulfone, insbesondere die in der deutschen Patentanmeldung Nr. 10052242.4 beschriebenen Polyethersulfone, in Betracht. Zu den weiteren Polymeren, die als Blendkomponente eingesetzt werden können, gehören unter anderem Polyolefine, wie Poly(cloropren), Polyacetylen, Polyphenylen, Poly (*p*-xylylen), Polyarylmethylen, Polyarmethylen, Polystyrol, Polymethylstyrol, Polyvinylalkohol, Polyvinylacetat, Polyvinylether, Polyvinylamin, Poly(N-vinylacetamid), Polyvinylimidazol, Pölyvinylcarbazol, Polyvinylpyrrolidon, Polyvinylpyridin, Polyvinylchlorid, Polyvinylidenchlorid, Polytetrafluorethylen, Polyhexafluorpropylen, Copolymere von PTFE mit Hexafluoropropylen, mit Perfluorpropylvinylether, mit Trifluoronitrosomethan, mit Sulfonylfluoridvinylether, mit Carbalkoxyperfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbornen; Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat;

Polymere C-S-Bindungen in der Hauptkette, beispielsweise Polysulfidether, Polyphenylensulfid, Polyethersulfon;

Polymere C-N-Bindungen in der Hauptkette, beispielsweise Polyimine, Polyisocyanide,Polyetherimin, Polyanilin, Polyamide, Polyhydrazide, Polyurethane, Polyimide, Polyazole, Polyazine;

Flüssigkristalline Polymere, insbesondere Vectra sowie

Anorganische Polymere, beispielsweise Polysilane, Polycarbosilane, Polysiloxane, Polykieselsäure, Polysilikate, Silicone, Polyphosphazene und Polythiazyl.

Zur Anwendung in Brennstoffzellen mit einer Dauergebrauchstemperatur oberhalb 100°C werden solche Blend-Polymere bevorzugt, die eine Glasübergangstemperatur oder Vicat-Erweichungstemperatur VST/A/50 von mindestens 100°C, bevorzugt mindestens 150°C und ganz besonders bevorzugt mindestens 180°C haben. Hierbei sind Polysulfone mit einer Vicat-Erweichungstemperatur VST/A/50 von 180°C bis 230°C bevorzugt.

Zu den bevorzugten Polymeren gehören Polysulfone, insbesondere Polysulfon mit Aromaten in der Hauptkette. Gemäß einem besonderen Aspekt der vorliegenden Erfindung weisen bevorzugte Polysulfone und Polyethersulfone eine Schmelzvolumenrate MVR 300/21,6 kleiner oder gleich 40 $cm^3$/ 10 min, insbesondere kleiner oder gleich 30 $cm^3$/ 10 min und besonders bevorzugt kleiner oder gleich 20 $cm^3$/ 10 min gemessen nach ISO 1133 auf.

Gemäß einem besonderen Aspekt kann die Polymermembran mindestens ein Polymer mit aromatischen Sulfonsäuregruppen und/oder Phosphonsäuregruppen umfassen. Aromatische Sulfonsäuregruppen und/oder Phosphonsäuregruppen sind Gruppen, bei denen die Sulfonsäuregruppe ($-SO_3H$) und/oder Phosphonsäuregruppen ($-PO_3H_2$) kovalent an eine aromatischen oder heteroaromatischen Gruppe gebunden ist. Die aromatische Gruppe kann ein Teil

der Hauptkette (back bone) des Polymeren oder ein Teil einer Seitengruppe sein, wobei Polymere mit aromatischen Gruppen in der Hauptkette bevorzugt sind. Die Sulfonsäuregruppen und/oder Phosphonsäuregruppen können vielfach auch in Form der Salze eingesetzt werden. Des weiteren können auch Derivate, beispielsweise Ester, insbesondere Methyl- oder Ethylester, oder Halogenide der Sulfonsäuren verwendet werden, die beim Betrieb der Membran in die Sulfonsäure umgesetzt werden.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4; 5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können. Bevorzugte Substituenten sind Halogenatome wie z. B. Fluor, Aminogruppen, Hydroxygruppen oder Alkylgruppen.

Dabei ist das Substitionsmuster beliebig, im Falle vom Phenylen beispielsweise kann ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Die mit Sulfonsäuregruppen modifizierten Polymere besitzen vorzugsweise einen Gehalt an Sulfonsäuregruppen im Bereich von 0,5 bis 3 meq/g, vorzugsweise 0,5 bis 2 meq/g. Dieser Wert wird über die sog. Ionenaustauschkapazität (IEC) bestimmt.

Zur Messung der IEC werden die Sulfonsäuregruppen in die freie Säure überführt. Hierzu wird das Polymere auf bekannte Weise mit Säure behandelt, wobei überschüssige Säure durch Waschen entfernt wird. So wird das sulfonierte Polymer zunächst 2 Stunden in siedendem Wasser behandelt. Anschliessend wird überschüssiges Wasser abgetupt und die Probe während 15 Stunden bei 160°C im Vakkumtrockenschrank bei $p<1$ mbar getrocknet. Dann wird das Trockengewicht der Membran bestimmt. Das so getrocknete Polymer wird dann in DMSO bei 80°C während 1 h gelöst. Die Lösung wird anschliessend mit 0,1 M NaOH titriert. Aus dem Verbrauch der Säure bis zum Equivalentpunkt und dem Trockengewicht wird dann die Ionenaustauschkapazität (IEC) berechnet.

Polymere mit an aromatische Gruppen kovalent gebundene Sulfonsäuregruppen sind in der Fachwelt bekannt. So können Polymer mit aromatischen Sulfonsäuregruppen beispielsweise durch Sulfonierung von Polymeren hergestellt werden. Verfahren zur Sulfonierung von Polymeren sind in F. Kucera et. al. Polymer Engineering and Science1988, Vol. 38, No 5, 783-792 beschrieben. Hierbei können die Sulfonierungsbedingungen so gewählt werden, dass ein niedriger Sulfonierungsgrad entsteht (DE-A-19959289).

Im Hinblick auf Polymere mit aromatischen Sulfonsäuregruppen, deren aromatische Reste Teil der Seitengruppe sind, sei insbesondere auf Polystyrolderivate verwiesen. So beschreibt die Druckschrift US-A-6110616 Copolymere aus Butadien und Styrol und deren anschließende Sulfonierung zur Verwendung für Brennstoffzellen.

Des weiteren können derartige Polymere auch durch Polyreaktionen von Monomeren erhalten werden, die Säuregruppen umfassen. So können perfluorinierte Polymere wie in US-A-5422411 beschrieben durch Copolymerisation aus Trifluorostyrol und sulfonylmodifiziertem Trifuorostyrol hergestellt werden.

Gemäß einem besonderen Aspekt der vorliegenden Erfindung werden hochtemperaturstabile Thermoplaste eingesetzt, die an aromatische Gruppen gebundene Sulfonsäuregruppen aufweisen. Im allgemeinen weisen derartige Polymere in der Hauptkette aromatische Gruppen auf. So sind sulfonierte Polyetherketone (DE-A-4219077, WO96/01177), sulfonierte Polysulfone (J. Membr. Sci. 83 (1993) p.211) oder sulfoniertes Polyphenylensulfid (DE-A-19527435) bevorzugt.

Die zuvor dargelegten Polymere mit an Aromaten gebundenen Sulfonsäuregruppen können einzeln oder als Mischung eingesetzt werden, wobei insbesondere Mischungen bevorzugt sind, die Polymere mit Aromaten in der Hauptkette aufweisen.

Das Molekulargewicht der Polymere mit an Aromaten gebundenen Sulfonsäuregruppen kann, je nach Art des Polymeren sowie dessen Verarbeitbarkeit in weiten Bereichen liegen. Vorzugsweise liegt das Gewichtsmittel des Molekulargewichts $M_w$ im Bereich von 5000 bis 10 000 000, insbesondere 10000 bis 1000 000, besonders bevorzugt 15

000 bis 50 000. Gemäß einem besonderen Aspekt der vorliegenden Erfindung werden Polymere mit an Aromaten gebundenen Sulfonsäuregruppen, die einen geringen Polydispersitätsindex $M_w/M_n$ aufweisen. Vorzugsweise liegt der Polydispersitätsindex im Bereich 1 bis 5, insbesondere 1 bis 4.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann entweder vor, während oder nach Schritt A) und/oder Schritt B) oder vor Schritt C) erfolgen

Nicht limitierende Beispiele für Protonenleitende Füllstoffe sind

| | |
|---|---|
| Sulfate wie: | $CsHSO_4$, $Fe(SO_4)_2$, $(NH_4)_3H(SO_4)_2$, $LiHSO_4$, $NaHSO_4$, $KHSO_4$, $RbSO_4$, $LiN_2H_5SO_4$ $NH_4HSO_4$, |
| Phosphate wie | $Zr_3(PO_4)_4$, $Zr(HPO_4)_2$, $HZr_2(PO_4)_3$, $UO_2PO_4.3H_2O$, $H_8UO_2PO_4$, $Ce(HPO_4)_2$, $Ti(HPO_4)_2$, $KH_2PO_4$, $NaH_2PO_4$, $LiH_2PO_4$, $NH_4H_2PO_4$, $CsH_2PO_4$, $CaHPO_4$, $MgHPO_4$, $HSbP_2O_8$, $HSb_3P_2O_{14}$, $H_5Sb_5P_2O_{20}$, |
| Polysäure wie | $H_3PW_{12}O_{40}.nH_2O$ (n=21-29), $H_3SiW_{12}O_{40}.nH_2O$ (n=21-29), $H_xWO_3$, $HSbWO_6$, $H_3PMo_{12}O_{40}$, $H_2Sb_4O_{11}$, $HTaWO_6$, $HNbO_3$, $HTiNbO_5$, $HTiTaO_5$, $HSbTeO_6$, $H_5Ti_4O_9$, $HSbO_3$, $H_2MoO_4$ |
| Selenide und Arsenide wie | $(NH_4)_3H(SeO_4)_2$, $UO_2AsO_4$, $(NH_4)_3H(SeO_4)_2$, $KH_2AsO_4$, $Cs_3H(SeO_4)_2$, $Rb_3H(SeO_4)_2$, |
| Phosphide wie | ZrP, TiP, HfP |
| Oxide wie | $Al_2O_3$, $Sb_2O_5$, $ThO_2$, $SnO_2$, $ZrO_2$, $MoO_3$ |
| Silikate wie | Zeolithe, Zeolithe($NH_4$+), Schichtsilikate, Gerüstsilikate, H-Natrolite, H-Mordenite, $NH_4$-Analcine, $NH_4$-Sodalite, $NH_4$-Gallate, H-Montmorillonite |
| Säuren wie | $HClO_4$, $SbF_5$ |
| Füllstoffe wie | Carbide, insbesondere SiC, $Si_3N_4$, Fasern, insbesondere Glasfasern, Glaspulvern und/ oder Polymerfasern, bevorzugt auf Basis von Polyazolen. |

Als weiteres kann diese Membran auch perfluorierte Sulfonsäure Additive (0,1-20 wt%, bevorzugt 0,2-15 wt%, ganz bevorzugt 0,2- 10 wt%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)
Nicht limitierende Beispiele für persulfonierte Additive sind:

Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nation.

Als weiteres kann die Membran auch als Additive enthalten, die die im Betrieb bei der Sauerstoffreduktion erzeugten Peroxidradikale abfangen (primäre Anitoxidanzien) oder zerstören (sekundäre Antioxidanzien) und dadurch wie in JP2001118591 A2 beschrieben Lebensdauer und Stabilität der Membran und Membranelektrodeneinheit verbessern. Die Funktionsweise und molekularen Strukturen solcher Additive sind in F. Gugumus in Plastics Additives, Hanser Verlag, 1990; N.S. Allen, M. Edge Fundamentals of Polymer Degradation and Stability, Elsevier, 1992; oder H. Zweifel, Stabilization of Polymeric Materials, Springer, 1998 beschrieben.
Nicht limitierende Beispiele für solche Additive sind:

Bis(trifluormethyl)nitroxid, 2,2-Diphenyl-1-pikrinylhydrazyl, Phenole, Alkylphenole, sterisch gehinderte Alkylphenole wie zum Beispiel Irganox, aromatische Amine, sterisch gehinderte Amine wie zum Beispiel Chimassorb; sterisch gehinderte Hydroxylamine, sterisch gehinderte Alkylamine, sterisch gehinderte Hydroxylamine, sterisch gehinderte Hydroxylaminether, Phosphite wie zum Beispiel Irgafos, Nitrosobenzol, Methyl.2-nitroso-propan, Benzophenon, Benzaldehyd-tert.-butylnitron, Cysteamin, Melanine, Bleioxide, Manganoxide, Nickeloxide, Cobaltoxide.

Zu möglichen Einsatzgebieten der erfindungsgemäßen, dotierten Polymermembranen gehören unter anderem

die Verwendung in Brennstoffzellen, bei der Elektrolyse, in Kondensatoren und in Batteriesystemen. Aufgrund ihres Eigenschaftsprofils werden die dotierten Polymermembranen vorzugsweise in Brennstoffzellen verwendet.

Die vorliegende Erfindung betrifft auch eine Membran-Elektroden-Einheit, die mindestens eine erfindungsgemäße Polymermembran aufweist. Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

In einer Variante der vorliegenden Erfindung kann die Membranbildung anstelle auf einem Träger auch direkt auf der Elektrode erfolgen. Die Behandlung gemäß Schritt D) kann hierdurch entsprechend verkürzt werden, da die Membran nicht mehr selbsttragend sein muß. Auch eine solche Membran ist Gegenstand der vorliegenden Erfindung.

Ein weiterer Gegenstand der vorliegenden Erfindung ist eine Elektrode die mit einer protonenleitenden Polymerbeschichtung auf Basis von Polyazolen erhältlich durch ein Verfahren umfassend die Schritte

A) Lösen des Polyazol-Polymeren in organischen Phosphonsäureanhydriden unter Ausbildung einer Lösung und/ oder Dispersion,
B) Erwärmen der Lösung erhältlich gemäß Schritt A) unter Inertgas auf Temperaturen von bis zu 400°C, vorzugsweise bis zu 350°C, insbesondere von bis zu 300°C,
C) Bilden einer Membran unter Verwendung der Lösung des Polyazol-Polymeren gemäß Schritt B) auf einer Elektrode und
D) Behandlung der in Schritt C) gebildeten Membran bis diese selbsttragend ist.

Die vorstehend beschriebenen Varianten und bevorzugten Ausführungsformen sind auch für diesen Gegenstand gültig, so daß an dieser Stelle auf deren Wiederholung verzichtet wird.

Die Beschichtung hat nach Schritt D) eine Dicke zwischen 2 und 3000 $\mu$m, vorzugsweise zwischen 3 und 2000 $\mu$m, insbesondere zwischen 5 und 1500 $\mu$m hat.

Eine derartig beschichtete Elektrode kann in einer Membran-Elektroden-Einheit, die gegebenenfalls mindestens eine erfindungsgemäße Polymermembran aufweist, eingebaut werden.

Allgemeine Messmethoden:

Messmethode für IEC

Die Leitfähigkeit der Membran hängt stark vom Gehalt an Säuregruppen ausgedrückt durch die sog. Ionenaustauschkapazität (IEC) ab. Zur Messung der Ionenaustauschkapazität wird eine Probe mit einem Durchmesser von 3 cm ausgestanzt und in ein mit 100 ml Wasser gefülltes Becherglas gegeben. Die freigesetzte Säure wird mit 0,1 M NaOH titriert. Anschliessend wird die Probe entnommen, überschüssiges Wasser abgetupft und die Probe bei 160°C während 4h getrocknet. Dann bestimmt man das Trockengewicht, $m_0$, gravimetrisch mit einer Genauigkeit von 0,1 mg. Die Ionenaustauschkapazität wird dann aus dem Verbrauch der 0,1M NaOH bis zum ersten Titrationsendpunkt, $V_1$ in ml, und dem Trockengewicht, $m_0$ in mg, gemäss folgender Formel berechnet:

$$IEC=V_1*300/m_0$$

Messmethode für spezifische Leitfähigkeit

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-1 00 Thermoelement geregelt. Nach Erreichen der Temperatur wird die Probe vor dem Start der Messung 10 Minuten auf dieser Temperatur gehalten

**Patentansprüche**

1. Protonenleitende Polymermembran auf Basis von Polyazolen erhältlich durch ein Verfahren umfassend die Schritte

   A) Lösen des Polyazol-Polymeren in organischen Phosphonsäureanhydriden unter Ausbildung einer Lösung und/oder Dispersion,
   B) Erwärmen der Lösung erhältlich gemäß Schritt A) unter Inertgas auf Temperaturen von bis zu 400°C, vorzugsweise bis zu 350°C, insbesondere von bis zu 300°C,
   C) Bilden einer Membran unter Verwendung der Lösung des Polyazol-Polymeren gemäß Schritt B) auf einem Träger und
   D) Behandlung der in Schritt C) gebildeten Membran bis diese selbsttragend ist.

2. Membran gemäß Anspruch 1, **dadurch gekennzeichnet, daß** in Schritt A) organische Phosphonsäureanhydride der Formel

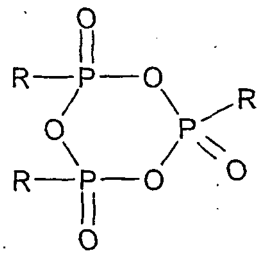

oder um linearen Verbindungen der Formel

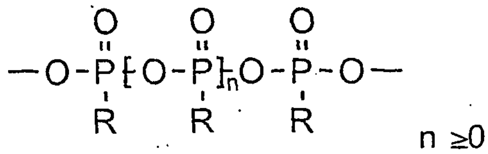

oder um Anhydride der mehrfachen organsichen Phosphonsäuren der,Formel

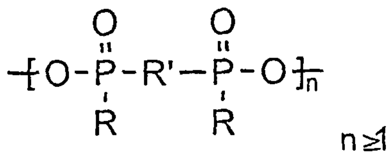

worin der Rest R und R' gleich oder verschieden ist und für eine $C_1$ - $C_{20}$ - kohlenstoffhaltigen Gruppe steht.

3. Membran gemäß Anspruch 1, **dadurch gekennzeichnet, daß** in Schritt A) zusätzlich eine Polyphosphorsäure mit einem Gehalt berechnet als $P_2O_5$ (acidimetrisch) von mindestens 83% eingesetzt wird.

4. Membran gemäß Anspruch 1, **dadurch gekennzeichnet, daß** in Schritt A) zusätzlich $P_2O_5$ eingesetzt wird.

5. Membran gemäß Anspruch 1, **dadurch gekennzeichnet, daß** in Schritt A), B) oder Schritt C) eine Lösung oder eine Dispersion/Suspension erzeugt wird.

6. Membran gemäß Anspruch 1, **dadurch gekennzeichnet, daß** in Schritt A) eingesetzte Polymer wiederkehrende Azoleinheiten der allgemeinen Formel (I) und/oder (II)

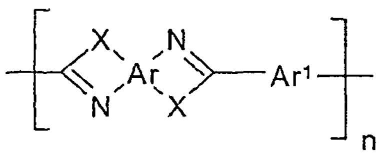

(I)

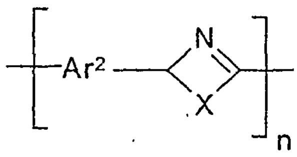

(II)

worin

Ar gleich oder verschieden sind und für eine vierbindige aromatische oder heteroaromatische Gruppe, die ein- oder mehrkernig sein kann,
$Ar^1$ gleich oder verschieden sind und für eine zweibindige aromatische oder heteroaromatische Gruppe, die ein- oder mehrkernig sein kann,
$Ar^2$ gleich oder verschieden sind und für eine zwei oder dreibindige aromatische oder heteroaromatische Gruppe, die ein- oder mehrkernig sein kann,
X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt,

enthält.

7. Membran gemäß Anspruch 1, **dadurch gekennzeichnet, daß** in Schritt A) ein Polymer ausgewählt aus der Gruppe Polybenzimidazol, Poly(pyridine), Poly(pyrimidine), Polyimidazole, Polybenzthiazole, Polybenzoxazole, Polyoxadiazole, Polyquinoxalines, Polythiadiazole und Poly(tetrazapyrene) eingesetzt wird.

8. Membran gemäß Anspruch 1, **dadurch gekennzeichnet, daß** in Schritt A) eingesetzte Polymer ein oder mehrere wiederkehrende Benzimidazoleinheiten der Formel

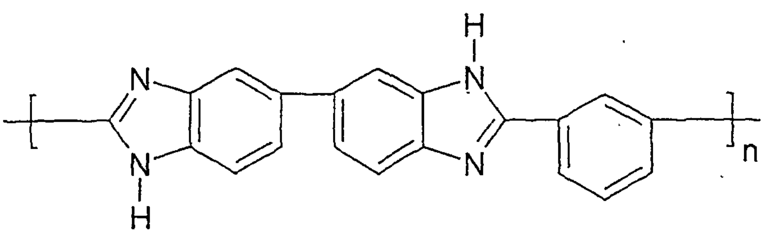

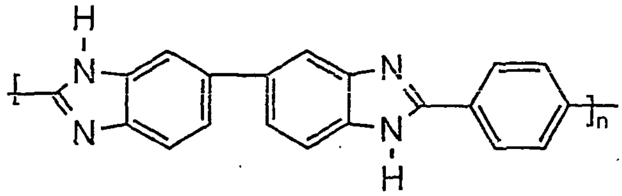

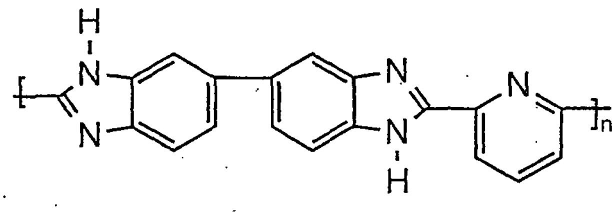

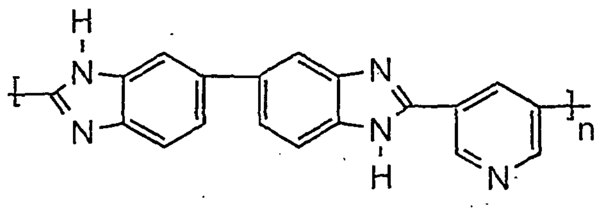

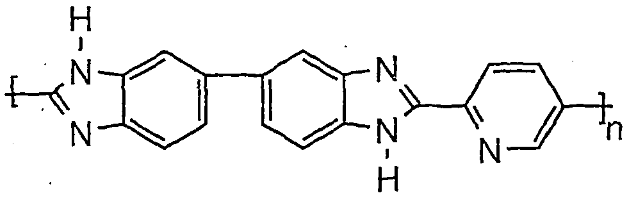

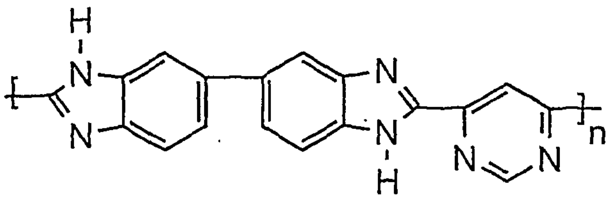

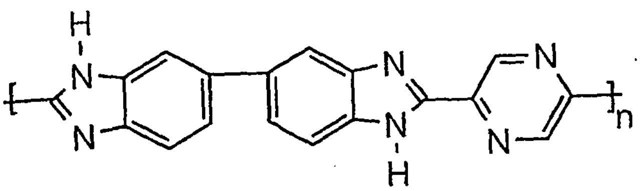

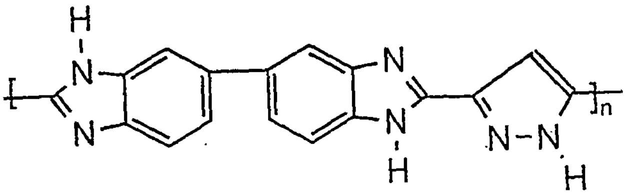

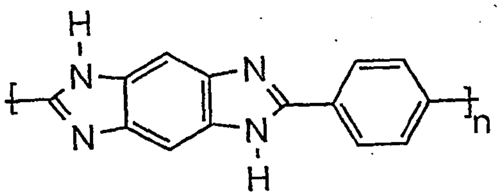

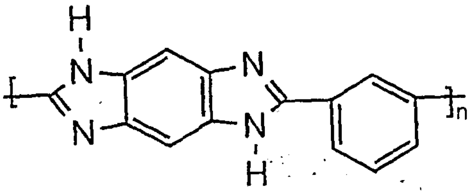

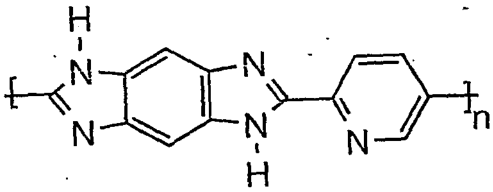

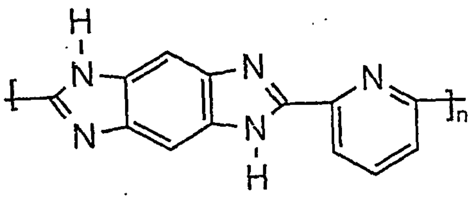

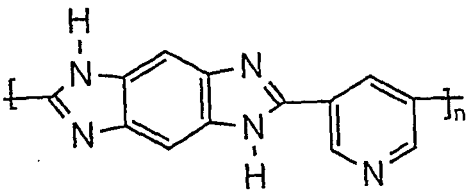

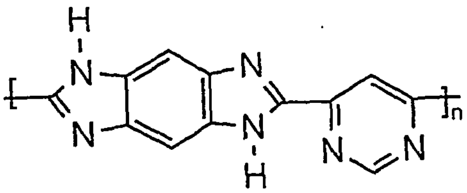

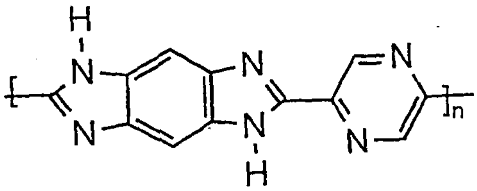

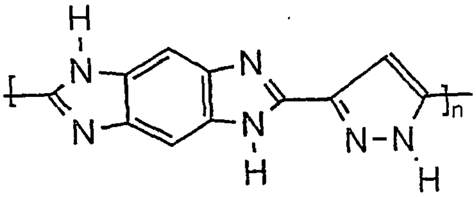

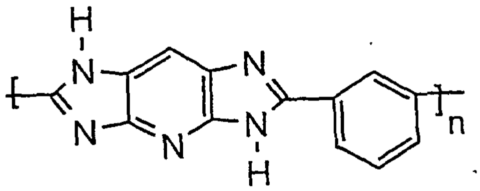

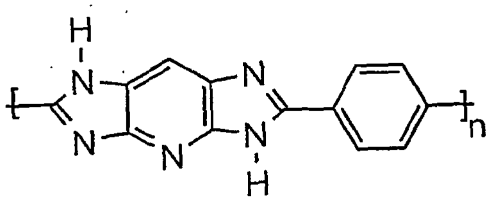

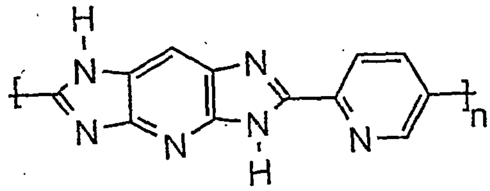

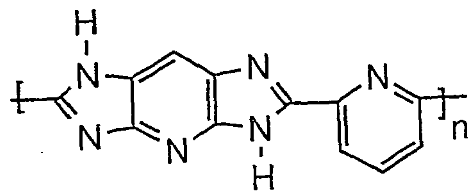

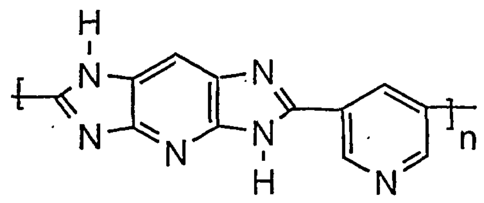

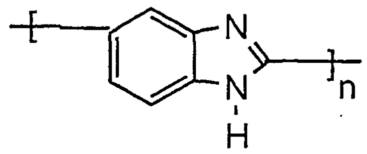

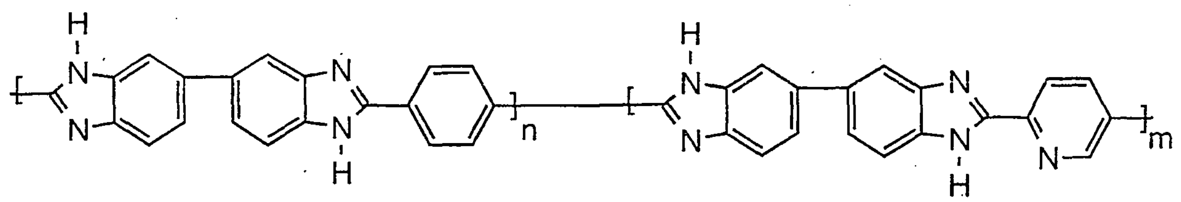

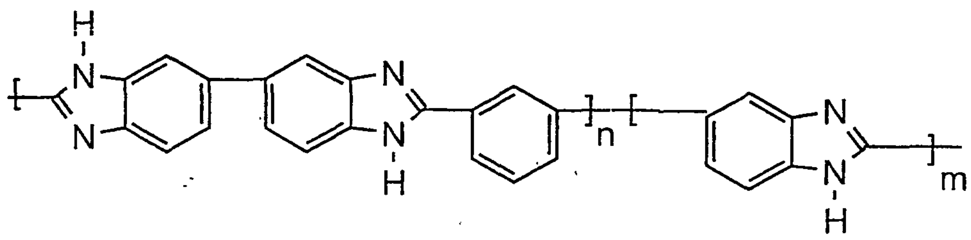

wobei n eine ganze Zahl größer gleich 10, vorzugsweise größer gleich 100 ist, enthält.

9. Membran gemäß Anspruch 1, **dadurch gekennzeichnet, daß** vor, während oder nach Schritt A) und/oder B) oder vor Schritt C) ein weiteres Polymer als Blendmaterial zugesetzt wird.

10. Membran gemäß Anspruch 1, **dadurch gekennzeichnet, daß** vor Schritt D) die Viskosität durch Zugabe von Phosphorsäure und/oder von organo-Phosphonsäuren eingestellt wird.

11. Membran gemäß Anspruch 1, **dadurch gekennzeichnet, daß** die gemäß Schritt C) erzeugten Membran in Gegenwart von Feuchtigkeit bei Temperaturen und für eine Zeitdauer behandelt wird bis die Membran selbsttragend ist und ohne Beschädigung vom Träger abgelöst werden kann.

12. Membran gemäß Anspruch 1, **dadurch gekennzeichnet, daß** die Behandlung der Membran in Schritt D) erfolgt bei Temperaturen oberhalb 0°C und 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf erfolgt.

13. Membran gemäß Anspruch 1, **dadurch gekennzeichnet, daß** die Behandlung der Membran in Schritt D) zwischen 10 Sekunden und 300 Stunden, vorzugsweise 1 Minute bis 200 Stunden, beträgt.

14. Membran gemäß Anspruch 1, **dadurch gekennzeichnet, daß** in Schritt C) als Träger eine Elektrode gewählt wird

und die Behandlung gemäß Schritt D) dergestalt ist, daß die gebildete Membran nicht mehr selbsttragend ist.

15. Membran gemäß Anspruch 1, **dadurch gekennzeichnet, daß** in Schritt C) eine Schicht mit einer Dicke von 20 und 4000 μm, vorzugsweise zwischen 30 und 3500 μm, insbesondere zwischen 50 und 3000 μm erzeugt wird.

16. Membran gemäß Anspruch 1, **dadurch gekennzeichnet, daß** die in Schritt D) gebildete Membran eine Dicke zwischen 15 und 3000 μm, vorzugsweise zwischen 20 und 2000 μm, insbesondere zwischen 20 und 1500 μm hat.

17. Elektrode die mit einer protonenleitenden Polymerbeschichtung auf Basis von Polyazolen erhältlich durch ein Verfahren umfassend die Schritte

A) Lösen des Polyazol-Polymeren in organischen Phosphonsäureanhydriden unter Ausbildung einer Lösung und/oder Dispersion,
B) Erwärmen der Lösung erhältlich gemäß Schritt A) unter Inertgas auf Temperaturen von bis zu 400°C, vorzugsweise bis zu 350°C, insbesondere von bis zu 300°C,
C) Bilden einer.Membran unter Verwendung der Lösung des Polyazol-Polymeren gemäß Schritt B) auf einer Elektrode und
D) Behandlung der in Schritt C) gebildeten Membran.

18. Elektrode gemäß Anspruch 17, wobei die Beschichtung eine Dicke zwischen 2 und 3000 μm, vorzugsweise zwischen 3 und 2000 μm, insbesondere zwischen 5 und 1500 μm hat.

19. Membran-Elektroden-Einheit enthaltend mindestens eine Elektrode und mindestens eine Membran gemäß einem oder mehreren der Ansprüche 1 bis 16.

20. Membran-Elektroden-Einheit enthaltend mindestens eine Elektrode gemäß Anspruch 17 oder 18 und mindestens eine Membran gemäß einem oder mehreren der Ansprüche 1 bis 16.

21. Brennstoffzelle enthaltend eine oder mehrere Membran-Elektroden-Einheiten gemäß Anspruch 19 oder 20.

**Claims**

1. A proton-conducting polymer membrane based on polyazoles which can be obtained by a process comprising the steps of

A) dissolving the polyazol-polymer in organic phosphonic anhydrides with formation of a solution and/or dispersion,
B) heating the solution obtainable in accordance with step A) under inert gas to temperatures of up to 400°C, preferably up to 350°C, particularly of up to 300°C,
C) forming a membrane using the solution of the polyazole polymer in accordance with step B) on a support and
D) treatment of the membrane formed in step C) until it is self-supporting.

2. The membrane according to claim 1, **characterized in that,** in step A), organic phosphonic anhydrides of the formula

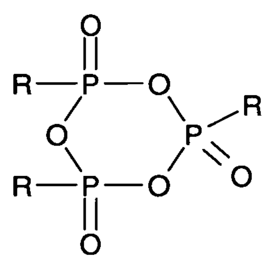

or linear compounds of the formula

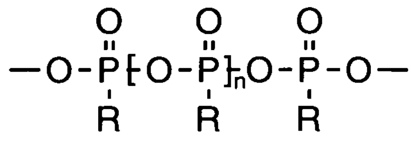

n ≥ 0

or anhydrides of the multiple organic phosphonic acids of the formula

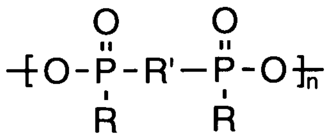

n≥1

wherein the radicals R and R' are identical or different and represent a $C_1$-$C_{20}$ carbon-containing group.

3. The membrane according to claim 1, **characterized in that,** in step A), a polyphosphoric acid having a content of at least 83%, calculated as $P_2O_5$ (by acidimetry), is additionally used.

4. The membrane according to claim 1, **characterized in that,** in step A), $P_2O_5$ is additionally used.

5. The membrane according to claim 1, **characterized in that,** in step A), B) or step C), a solution or a dispersion/suspension is produced.

6. The membrane according to claim 1, **characterized in that,** the polymer used in step A) contains recurring azole units of the general formula (I) and/or (II) wherein

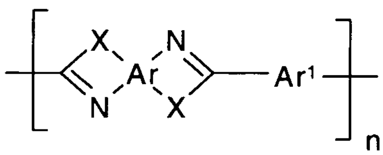

(I)

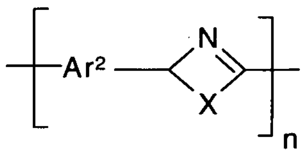

(II)

Ar are identical or different and represent a tetracovalent aromatic or heteroaromatic group which can be mononuclear or polynuclear,
$Ar^1$ are identical or different and represent a bicovalent aromatic or heteroaromatic group which can be mononuclear or polynuclear,
$Ar^2$ are identical or different and represent a bicovalent or tricovalent aromatic or heteroaromatic group which can be mononuclear or polynuclear,
X are identical or different and represent oxygen, sulphur or an amino group which carries a hydrogen atom, a group having 1 - 20 carbon atoms, preferably a branched or unbranched alkyl or alkoxy group, or an aryl group as a further radical.

7. The membrane according to claim 1, **characterized in that,** in step A), a polymer selected from the group consisting of polybenzimidazole, poly(pyridines), poly(pyrimidines), polyimidazoles, polybenzothiazoles, polybenzoxazoles, polyoxadiazoles, polyquinoxalines, polythiadiazoles and poly(tetrazapyrenes) is used.

8. The membrane according to claim 1, **characterized in that,** in step A), the polymer used contains one or more recurring benzimidazole units of the formula

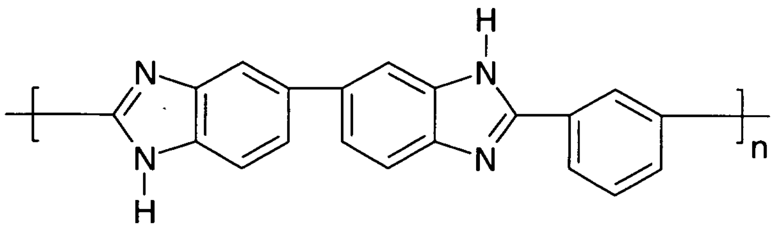

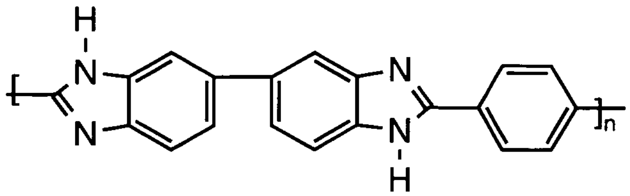

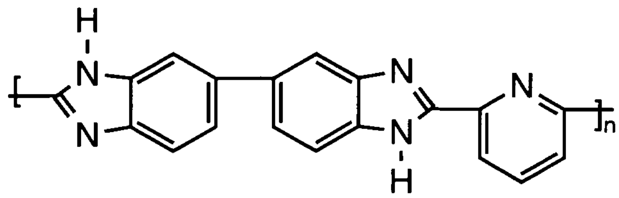

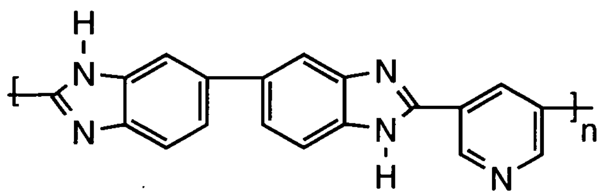

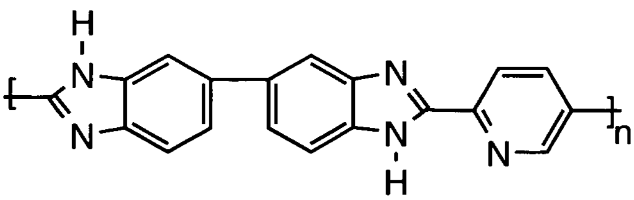

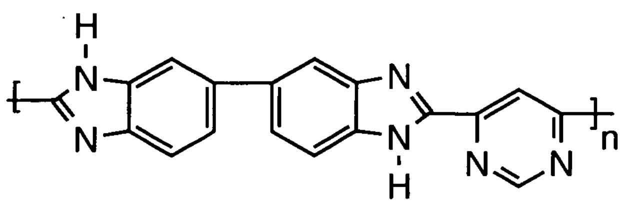

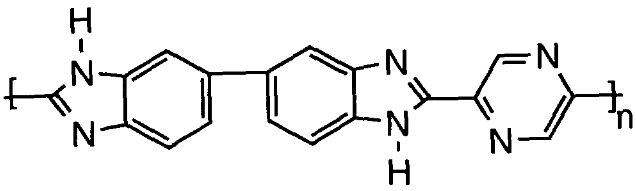

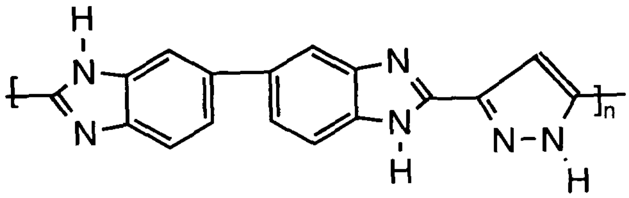

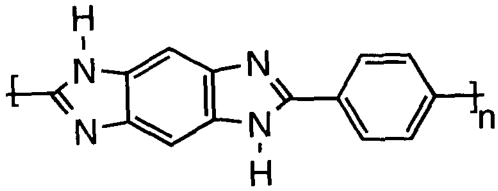

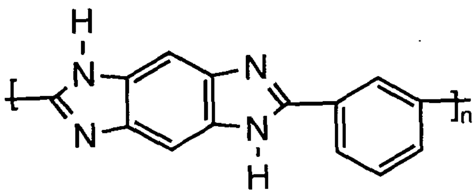

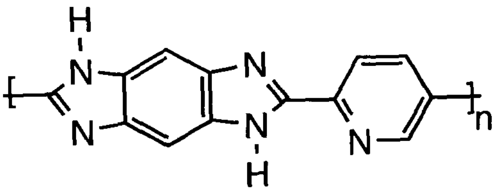

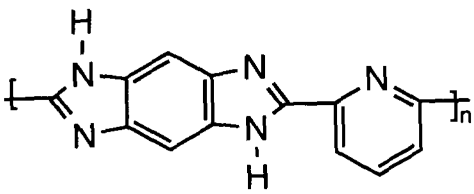

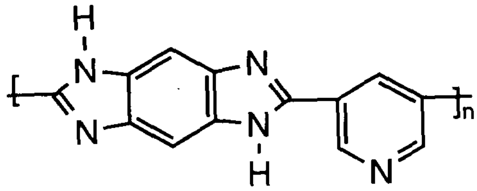

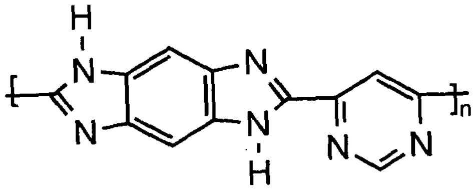

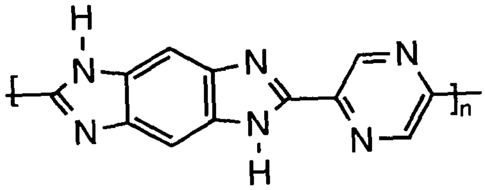

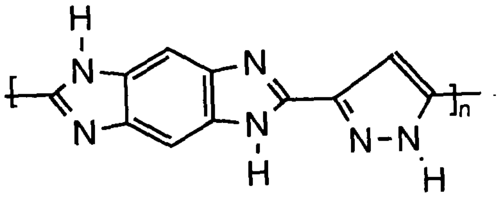

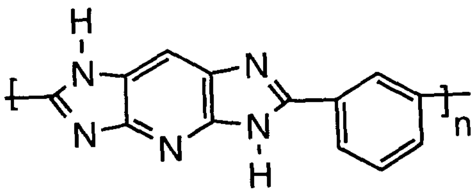

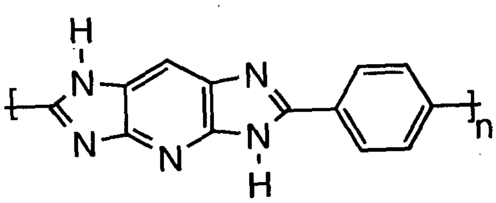

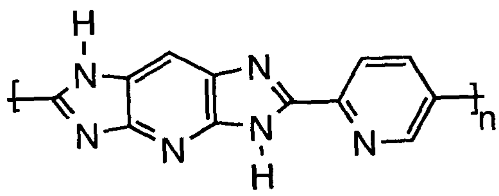

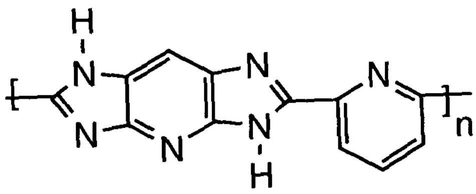

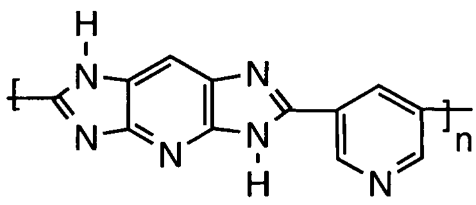

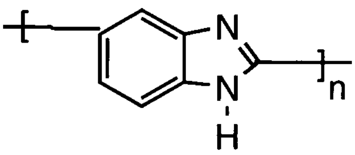

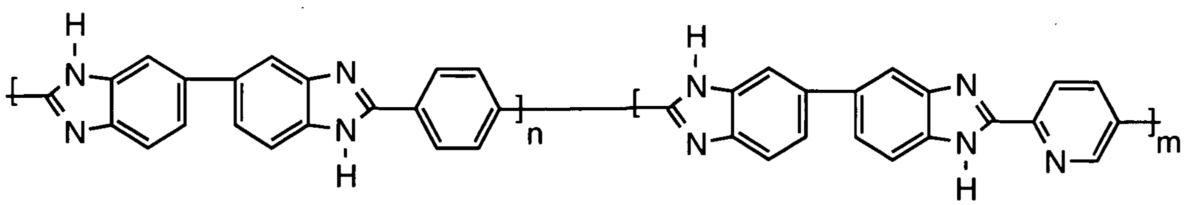

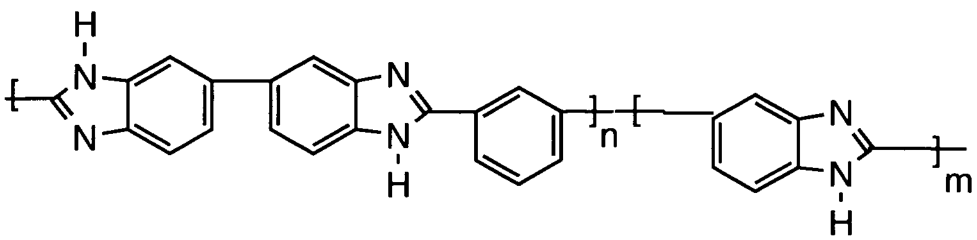

where n is an integer greater than or equal to 10, preferably greater than or equal to 100.

**9.** The membrane according to claim 1, **characterized in that,** before, during or after step A) and/other step B) or before step C), a further polymer is added as blend material.

**10.** The membrane according to claim 1, **characterized in that**, before step D), the viscosity is adjusted by addition of phosphoric acid and/or organophosphonic acids.

**11.** The membrane according to claim 1, **characterized in that** the membrane produced in accordance with step C) is treated in the presence of moisture at temperatures and for a period of time until the membrane is self-supporting and can be detached from the support without any damage.

**12.** The membrane according to claim 1, **characterized in that** the treatment of the membrane in step D) is performed at temperatures of more than 0°C and less than 150°C, preferably at temperatures between 10°C and 120°C, in particular between room temperature (20°C) and 90°C, in the presence of moisture or water and/or steam.

**13.** The membrane according to claim 1, **characterized in that** the treatment of the membrane in step D) is for 10 seconds to 300 hours, preferably 1 minute to 200 hours.

**14.** The membrane according to claim 1, **characterized in that,** in step C), an electrode is chosen as the support and the treatment in accordance with step D) is such that the membrane formed is no longer self-supporting.

**15.** The membrane according to claim 1, **characterized in that,** in step C), a layer having a thickness of 20 to 4000 μm, preferably between 30 and 3500 μm, in particular between 50 and 3000 μm, is produced.

**16.** The membrane according to claim 1, **characterized in that** the membrane formed in step D) has a thickness between 15 and 3000 μm, preferably between 20 and 2000 μm, in particular between 20 and 1500 μm.

**17.** An electrode having a proton-conducting polymer coating based on polyazoles which can be obtained by a process comprising the steps of

A) dissolving the polyazol-polymer in organic phosphonic anhydrides with formation of a solution and/or dispersion,
B) heating the solution obtainable in accordance with step A) under inert gas to temperatures of up to 400°C, preferably up to 350°C, particularly of up to 300°C,
C) forming a membrane using the solution of the polyazole polymer in accordance with step B) on an electrode and
D) treatment of the layer formed in step C).

**18.** The electrode according to claim 17 where the coating has a thickness between 2 and 3000 μm, preferably between 3 and 2000 μm, in particular between 5 and 1500 μm.

**19.** A membrane electrode unit containing at least one electrode and at least one membrane according to one or more of claims 1 to 16.

**20.** The membrane electrode unit containing at least one electrode according to claim 17 or claim 18 and at least one membrane according to one or more of claims 1 to 16.

**21.** A fuel cell containing one or more membrane electrode units according to claim 19 or claim 20.

**Revendications**

**1.** Membrane polymère conductrice de protons à base de polyazoles obtenue par une procédure comprenant les étapes:

A) résolution du polymère polyazole dans les anhydrides d'acide phosphonique organiques sous la formation d'une solution et /ou de dispersion,
B) chauffage de la solution disponible, conformément à l'étape A), sous gaz inerte à une température de 400° C, de préférence jusqu'à 350° C, en particulier à 300° C,
C) formation d'une membrane en utilisant la solution du polymère polyazole selon l'étape B) sur un support et

D) traitement à l'étape C) de cette membrane formée jusqu'à ce que celle-ci soit autonome.

2. Membrane selon revendication 1, **caractérisé en ce que,** à l'étape A, les anhydrides d'acide phosphonique organiques de la formule

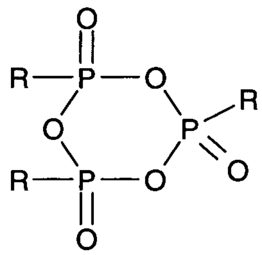

ou pour les liens linéaires de la formule

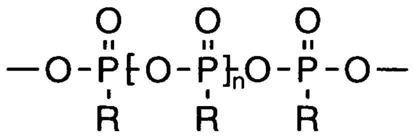

$n \geq 0$

ou pour les anhydrides des acides phosphoniques organiques multiples de la formule

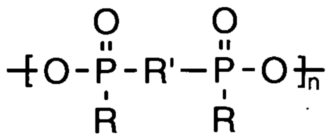

$n \geq 1$

où le reste de R et R' est égal ou différent et remplace un groupe contenant du carbone $C_1$ - $C_{20}$-.

3. Membrane selon revendication 1, **caractérisée en ce que** à l'étape A), un acide polyphosphonique supplémentaire d'une teneur calculée en $P_2O_5$ (acidimétrique) d'au moins 83% est introduit.

4. Membrane selon revendication 1, **caractérisée en ce que** à l'étape A), un $P_2O_5$ supplémentaire est introduit.

5. Membrane selon revendication 1, **caractérisée en ce que** à l'étape A), B) ou l'étape C), une solution ou une dispersion / suspension est produite.

6. Membrane selon revendication 1, **caractérisée en ce que** à l'étape A) des polymères placés dans un ensemble d'azole récurrent de la formule (I) et / ou (II)

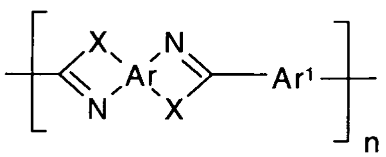

(I)

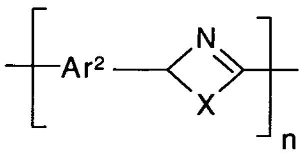

(II)

où il contient

Ar sont identiques ou différents et pour un groupe à quatre liaisons aromatique ou hétéro-aromatique qui peut être mono- ou polynucléaire,
$AR_1$ sont identiques ou différents et pour un groupe à deux liaisons aromatique ou hétéro-aromatique qui peut être mono- ou polynucléaire,
$AR_2$ sont identiques ou différents et pour un groupe à trois liaisons aromatique ou hétéro-aromatique qui peut être mono- ou polynucléaire,
X est identique ou différent pour l'oxygène, le soufre ou un amino-groupe, qui contient un atome d'hydrogène, un groupe présentant 1 - 20 atomes de carbone, de préférence un groupe alcyle ou alcoxy ramifié ou non ramifié, ou un groupe aryl en tant qu'autre reste.

**7.** Membrane selon revendication 1, **caractérisée en ce que** à l'étape A) un polymère sélectionné parmi le groupe polybenzimidazole, poly-(pyridine), poly-(pyrimidine), polyimidazole, polybenzthiazole, polybenzoxazoles, polyoxadiazole, polyquinoxalines, polythiadiazole et poly-(tetrazapyrene) est introduit.

**8.** Membrane selon revendication 1, **caractérisée en ce que à** l'étape A) un polymère placé contient un ou plusieurs ensemble(s) de benzimidazole récurrents de la formule

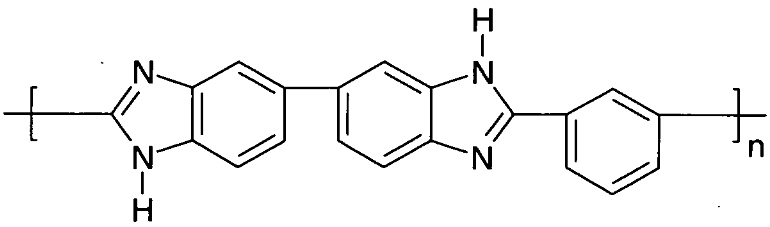

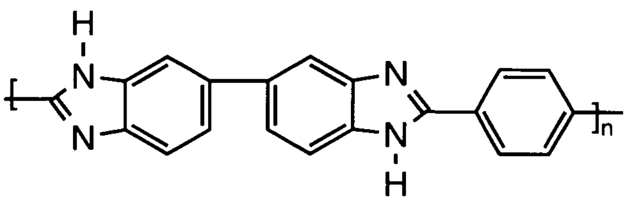

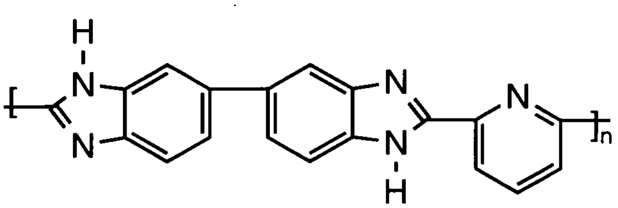

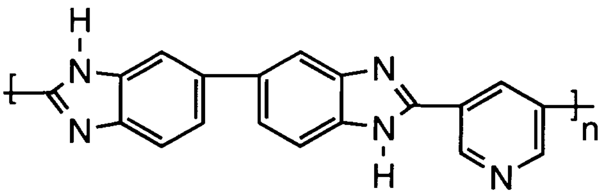

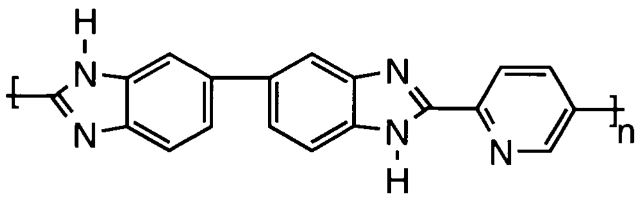

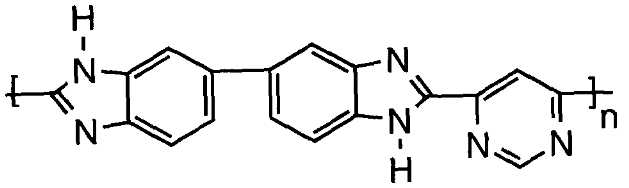

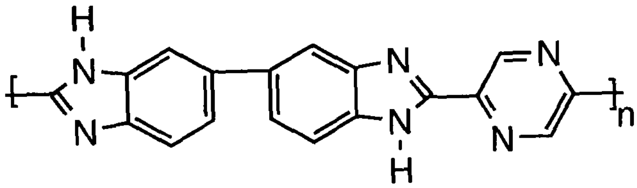

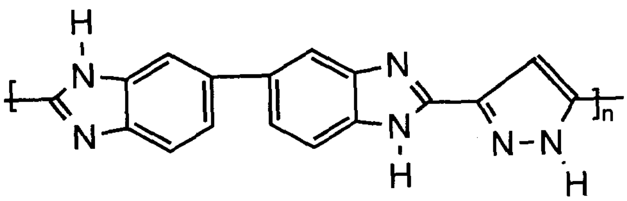

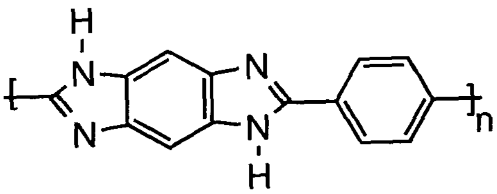

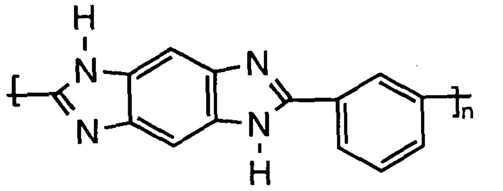

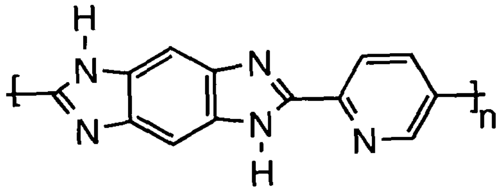

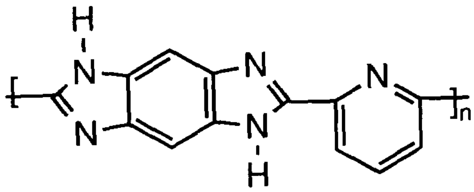

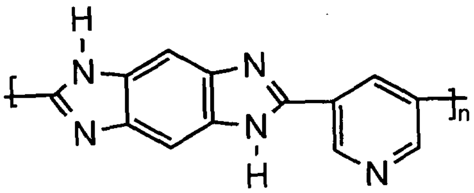

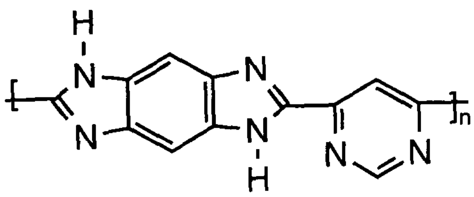

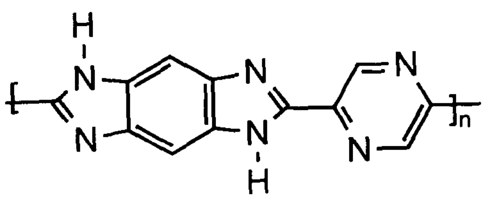

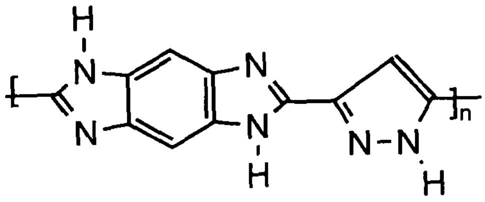

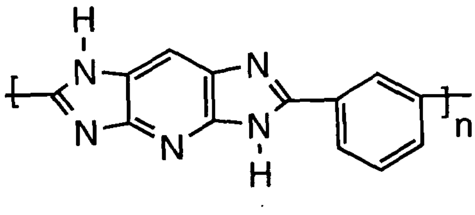

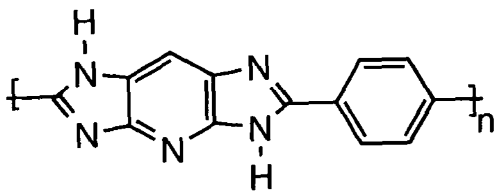

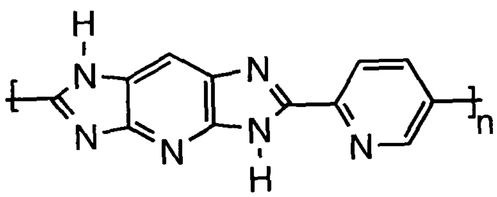

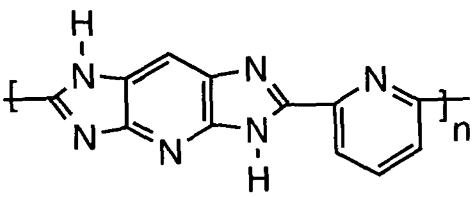

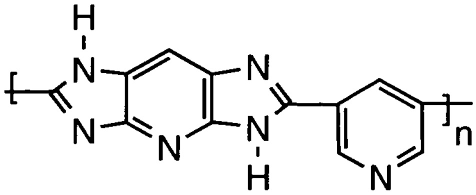

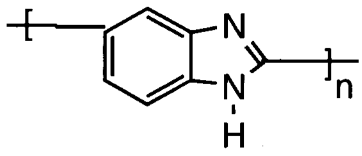

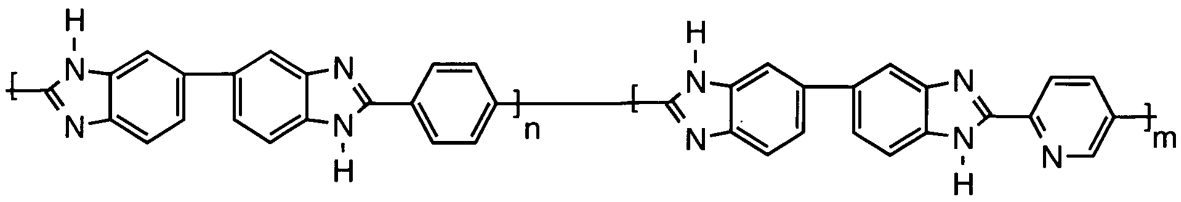

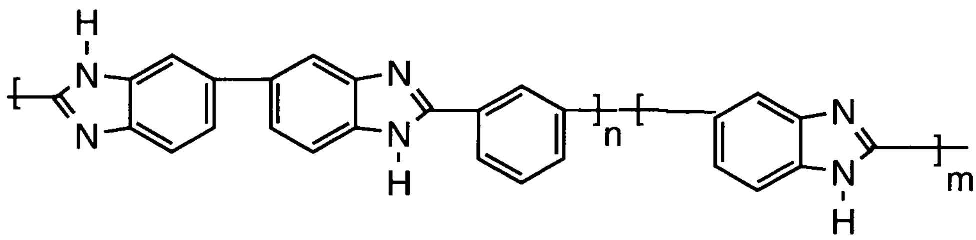

où η est un nombre entier supérieur ou égal à 10, de préférence supérieur ou égal à 100.

9. Membrane selon revendication 1, **caractérisée en ce que,** avant, pendant ou après l'étape A) et / ou B) ou avant l'étape C) un autre polymère est ajouté en tant que matériau 'Blend'.

10. Membrane selon revendication 1, **caractérisée en ce que** avant l'étape D) la viscosité est réglée par addition d'acide phosphorique et / ou d'acide organo-phosphorique.

11. Membrane selon revendication 1, **caractérisée en ce que** selon l'étape C) la membrane produite est traitée en présence d'humidité à des températures et pour une durée de temps jusqu'à ce que la membrane soit autonome et puisse être détachée du support sans dommages.

12. Membrane selon revendication 1, **caractérisée en ce que** le traitement de la membrane à l'étape D) s'effectue à des températures supérieures à 0° C et 150° C, de préférence à des températures comprises entre 10° C et 120° C, en particulier à des températures ambiantes comprises entre (20° C) et 90° C, en présence d'humidité à savoir d'eau et / ou de vapeur d'eau.

13. Membrane selon revendication 1, **caractérisée en ce que** le traitement de la membrane à l'étape D) s'effectue entre 10 secondes et 300 heures, de préférence de 1 minute à 200 heures.

14. Membrane selon revendication 1, **caractérisée en ce que** lors dans l'étape C) une électrode est sélectionnée en tant que support et le traitement selon l'étape D) est tel que la membrane formée n'est plus autoportante.

15. Membrane selon revendication 1, **caractérisée en ce que** dans l'étape C) une couche d'une épaisseur de 20 et 4000 μm, de préférence entre 30 et 3500 μm, en particulier entre 50 et 3000 μm est produite.

16. Membrane selon la revendication 1, **caractérisée en ce que** à l'étape D) fait la membrane formée a une épaisseur comprise entre 15 et 3000 μm, de préférence entre 20 et 2000 μm, en particulier entre 20 et 1500 a μm.

17. Electrode avec un enrobage polymère conducteur de protons sur la base de polyazoles, qui s'obtient par une procédure comprenant les étapes

A) dissolution des polymères de polyazole dans les anhydrides d'acide phosphonique organiques sous la formation d'une solution et / ou de dispersion,

B) chauffage de la solution qui s'obtient selon l'étape A) sous gaz inerte à une température de 400° C, de préférence jusqu'à 350° C, en particulier jusqu'à 300 ° C,

C) formation d'une membrane lors d'utilisation de la solution du polymère polyazole, selon l'étape B) sur une électrode et

D) traitement à l'étape C) de cette membrane formée.

**18.** Électrode selon revendication 17, où l'enrobage a une épaisseur comprise entre 2 et 3000 μm, de préférence entre 3 et 2000 μm, en particulier entre 5 et 1500 μm.

**19.** Unité d'électrode de membrane contenant au moins une électrode et au moins une membrane selon l'une ou plusieurs des revendications 1 à 16.

**20.** Unité d'électrode de membrane contenant au moins une électrode selon la revendication 17 ou 18 et au moins une membrane selon l'une ou plusieurs des revendications 1 à 16.

**21.** Pile à combustible contenant une ou plusieurs unité(s) d'électrode de membrane selon revendication 19 ou 20.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10109829
- DE 10117686
- DE 10117687
- DE 10144815
- DE 10213540
- DE 10052242
- DE 19959289 A
- US 6110616 A
- US 5422411 A
- DE 4219077 A
- WO 9601177 A
- DE 19527435 A
- JP 2001118591 A
- US 4191618 A
- US 4212714 A
- US 4333805 A


### In der Beschreibung aufgeführte Nicht-Patentliteratur


- **F. KUCERA.** *Polymer Engineering and Science,* 1988, vol. 38 (5), 783-792
- *J. Membr. Sci.,* 1993, vol. 83, 211
- **GANG, XIAO ; HJULER, H. A. ; OLSEN, C. ; BERG, R. W. ; BJERRUM, N. J.** Electrolyte additives for phosphoric acid fuel cells. *Chem. Dep. A*
- **LYNGBY.** *Den. J. Electrochem. Soc.,* 1993, vol. 140 (4), 896-902
- **RAZAQ, M. ; RAZAQ, A. ; YEAGER, E. ; DESMARTEAU, DARRYL D. ; SINGH, S.** Perfluorosulfonimide as an additive in phosphoric acid fuel cell. *Case Cent. Electrochem. Sci.*
- *J. Electrochem. Soc.,* 1989, vol. 136 (2), 385-90
- **F. GUGUMUS.** Plastics Additives. Hanser Verlag, 1990
- **N.S. ALLEN ; M. EDGE.** Fundamentals of Polymer Degradation and Stability. Elsevier, 1992
- **H. ZWEIFEL.** Stabilization of Polymeric Materials. Springer, 1998